# FASCICULE DE BREVET EUROPEEN

(11) **EP 0 962 855 B1**
(45) Date de publication et mention de la délivrance du brevet: **11.12.2002**
(21) Numéro de dépôt: 99401300.1
(22) Date de dépôt: 01.06.1999
(51) Int. Cl.: G06F 5/06, G06F 3/06

(54) **Accès rapide aux circuits tampons**
Schnell Zugriffzeit in Pufferschaltungen
Fast acces to buffer circuits

(30) Priorité: 04.06.1998 FR 9807013
(43) Date de publication de la demande: 08.12.1999
(73) Titulaire: STMicroelectronics S.A., 92120 Montrouge (FR)
(72) Inventeur: Agon, François, 92593 Levallois-Perret Cedex (FR); Vos, Mark, 92593 Levallois-Perret Cedex (FR)
(74) Mandataire: Ballot, Paul

(56) Documents cités:
- US-A- 5 163 132
- PATENT ABSTRACTS OF JAPAN vol. 011, no. 386 (P-647), 17 décembre 1987 (1987-12-17) & JP 62 151918 A (NEC CORP), 6 juillet 1987 (1987-07-06)

## Description

La présente invention a pour objet un circuit tampon disposant de moyens permettant sous certaines conditions un accès rapide à des données contenues dans ce circuit tampon. Une des applications préférée du circuit tampon selon l'invention est destinée à un usage dans une interface de mémoire externe d'un circuit complexe tel qu'un microprocesseur. Dans certaines applications, l'interface de mémoire externe peut constituer avec le microprocesseur un circuit monolithique.

Les interfaces de mémoires externes des circuits complexes tels que les microprocesseurs ont à gérer des communications avec ces circuits complexes dans les deux sens : du microprocesseur vers l'interface de mémoire externe et de l'interface de mémoire externe vers le microprocesseur.

Les communications s'effectuent sous la forme d'échanges d'informations, le plus souvent par l'intermédiaire d'une liaison câblée appelée bus de transmission bidirectionnel. Ces informations peuvent être des adresses mémoires, des données, ou encore des instructions de commande.

Les informations circulent sous forme de données binaires. Ces données binaires constituent des mots. Les informations circulent du microprocesseur vers l'interface de mémoire externe lorsque des requêtes d'accès à la mémoire externe sont émises par le microprocesseur. Les informations circulent de l'interface de mémoire externe vers le microprocesseur lorsque les réponses appropriées à ces requêtes sont renvoyées. Dans les deux cas, les informations circulent par le moyen du bus de transmission.

L'interface de mémoire externe doit donc disposer de deux circuits tampons : un circuit tampon d'entrée et un circuit tampon de sortie.

Les requêtes d'accès à la mémoire externe émises par le microprocesseur sont stockées dans le circuit tampon d'entrée de l'interface de mémoire externe. Ces requêtes sont alors décodées par l'interface de mémoire externe. On obtient grâce à ce décodage les adresses mémoires auxquelles on veut accéder ainsi que le type d'accès requis : il peut s'agir d'un accès en mode écriture ou d'un accès en mode lecture. L'accès réel à la mémoire externe est alors seulement effectif. Dans le cas d'une lecture de la mémoire externe, un mot lu est stocké dans le circuit tampon de sortie de l'interface de mémoire externe. Il est ensuite transmis vers le microprocesseur au moyen du bus de transmission.

Ce transfert d'informations peut être perturbé pour différentes raisons. Le transfert d'informations est cadencé par une horloge. Il peut être totalement bloqué pendant plusieurs périodes d'horloge. Or l'interface de mémoire externe ne peut pas satisfaire les requêtes d'accès à la mémoire externe si un précédent accès à cette mémoire externe n'a pas été traité. D'autre part, une réponse à une requête d'accès à la mémoire externe ne peut pas être envoyée par le bus de transmission si un autre échange d'informations a lieu au même moment sur ce bus de transmission. Ces éventualités de perturbations dans les échanges d'informations justifient l'existence d'une mémoire interne dans les circuits tampons d'entrée et de sortie de l'interface de mémoire externe.

La suite de la description fera référence uniquement au circuit tampon d'entrée d'une interface de mémoire externe aussi bien dans l'exposé de l'état de la technique que dans le cadre de la présentation de l'invention en elle-même. Il est cependant évident que le circuit tampon selon l'invention peut-être appliqué à toute autre interface dont les performances peuvent être améliorées par le circuit selon l'invention.

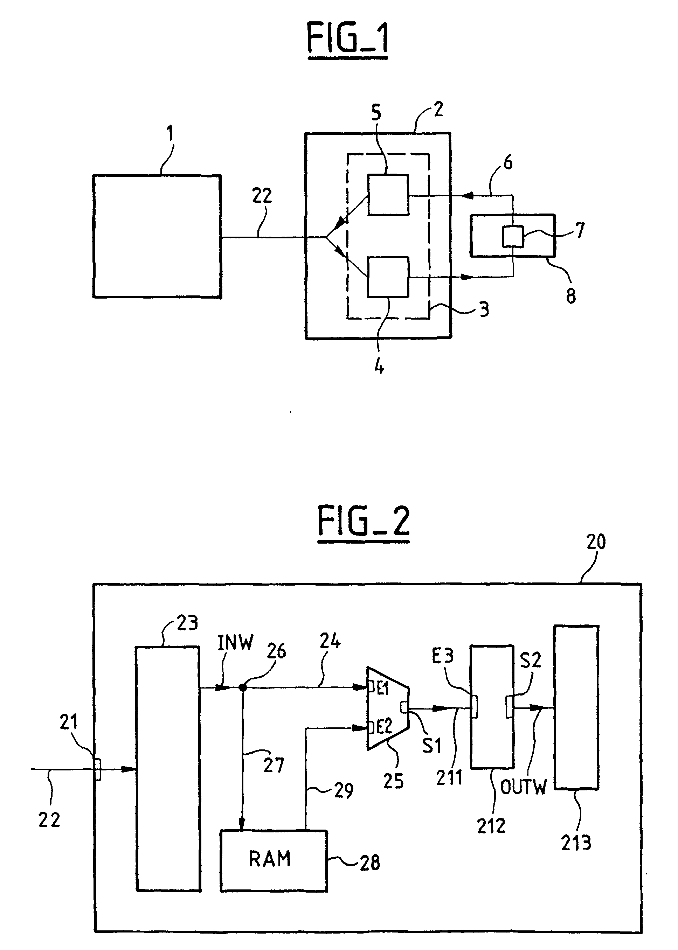

La figure 1 présente un schéma bloc des éléments essentiels intervenant lors des échanges d'informations entre un circuit complexe de type microprocesseur et une interface de mémoire externe.

Un microprocesseur 1 est connecté à une interface de mémoire externe 2 au moyen d'un bus de transmission 22. Ce bus de transmission 22 achemine les données jusqu'à un circuit tampon 3 de l'interface de mémoire externe 2. Le circuit tampon 3 est constitué d'un circuit tampon d'entrée 4 et d'un circuit tampon de sortie 5. Le circuit tampon d'entrée 4 reçoit les requêtes d'accès du microprocesseur 1. Le circuit tampon de sortie 5 émet les réponses à ces requêtes après un traitement effectué: un espace mémoire 7 d'une mémoire externe 8, visé par la requête, peut être lu, écrit ou effacé grâce à l'accès en mémoire 6.

La figure 2 montre un circuit tampon d'entrée connu d'une interface de mémoire externe.

Le schéma représenté à la figure 2 est un circuit tampon d'entrée 20 de l'état de la technique tel que divulgué, par exemple, dans le document JP-A-62151918. Ce circuit tampon d'entrée 20 peut être du type du circuit tampon d'entrée 4 que contient l'interface de mémoire externe décrite à la figure 1.

Le circuit tampon d'entrée 20 reçoit à une entrée 21 le bus de transmission 22. Les requêtes d'accès à la mémoire externe transportées par le bus de transmission 22 sont reçues par une interface de bus 23. Cette interface de bus 23 de type registre fournit en sortie un signal INW. Une liaison 24 assure la connexion entre l'interface de bus 23 et une première entrée E1 d'un premier multiplexeur 25. Une liaison 27 assure la connexion entre un point de connexion 26 de la liaison 24 et une unité de mémoire 28 de type mémoire RAM. Une liaison 29 assure la connexion entre l'unité de mémoire 28 et une seconde entrée E2 du premier multiplexeur 25. Une liaison 211 assure la connexion entre une sortie S1 du premier multiplexeur 25 et une entrée E3 d'un registre 212. Le registre 212 fournit à une sortie S2 un signal de sortie OUTW à une interface de décodage 213 de l'interface de mémoire externe.

Le fonctionnement du circuit présenté à la figure 2 est le suivant : les requêtes d'accès à la mémoire externe sont reçues par l'interface de bus 23. Si toutes les requêtes précédentes ont été traitées, l'unité de mémoire de type RAM 28 est vide. Dans ce cas l'unité de mémoire de type RAM 28 n'intervient pas. La dernière requête émise par le microprocesseur est directement transmise au premier registre 212 au travers de la première entrée E1 du premier multiplexeur 25 et des liaisons 24 et 211 sous la forme du signal INW. Cette requête peut alors être directement exploitée par l'interface de décodage 213.

Si une ou plusieurs requêtes n'ont pas encore été traitées au moment de la réception par l'interface de bus 23 d'une nouvelle requête, alors l'unité de mémoire de type RAM 28 n'est pas vide. Dans cette condition, ou alors si le transfert de données est bloqué, la ou les requêtes qui arrivent au circuit tampon d'entrée sont écrites dans l'unité de mémoire de type RAM 28. Quand une requête est lue dans l'unité de mémoire de type RAM 28, elle est ensuite transmise au premier registre 212 par l'intermédiaire de la seconde entrée E2 du premier multiplexeur 25 et des liaisons 29 et 211. Or la mémoire de type RAM 28 utilisée dans ce type de circuit tampon ne permet pas de lire une donnée pendant une période d'horloge où on écrit cette donnée (on parle de "no read through capability" dans la littérature anglaise).

Les transmissions entre le circuit complexe de type microprocesseur et l'interface de mémoire externe sont cadencées par une horloge. Quand une donnée est écrite dans un espace mémoire spécifique de l'unité de mémoire de type RAM 28 pendant une période d'horloge déterminée, le même espace mémoire de la mémoire de type RAM 28 est accessible en lecture au cycle d'horloge suivant seulement. Par conséquent, la donnée n'est transmise au premier registre 212 que deux périodes d'horloge après la période d'horloge correspondant à l'écriture de la donnée dans la mémoire de type RAM 28. On a ainsi perdu du temps dans la transmission de données entre l'interface de bus 23 et l'interface de décodage 213. En effet un temps égal à la durée d'une période d'horloge est perdu. On peut parler de l'existence d'un cycle de latence.

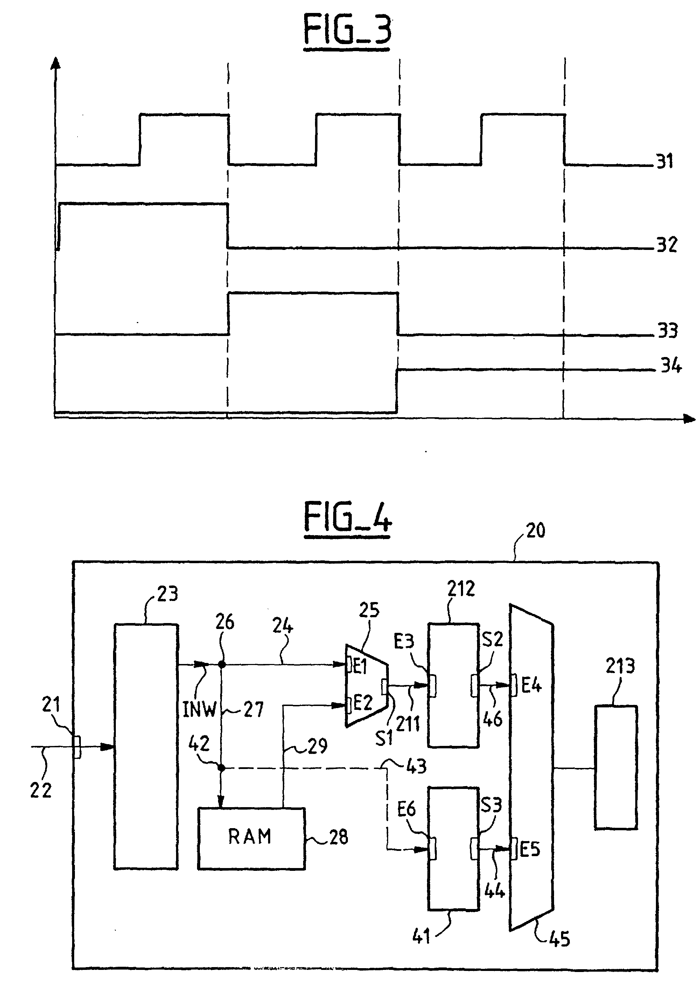

La figure 3 montre 4 chronogrammes. Le premier chronogramme 31 est le signal d'horloge. Le second chronogramme 32 montre l'accès en écriture à l'unité de mémoire de type RAM. Le troisième chronogramme 33 montre l'accès en lecture à l'unité de mémoire de type RAM. Le quatrième chronogramme 34 montre l'état du premier registre 212.

Pour ces 4 chronogrammes, l'axe des abscisses représente le déroulement du temps. Il est découpé en 4 intervalles de temps égaux. Chacun des 4 intervalles de temps correspond à une période d'horloge.

Un espace mémoire de l'unité de mémoire de type RAM est écrit au cours de la première période d'horloge. Cet accès en écriture est représenté au second chronogramme 32 par une impulsion de niveau haut. Pendant cette première période d'horloge, cet espace mémoire de l'unité de mémoire de type RAM change de valeur et ne peut être lu. Cette nouvelle et correcte valeur est disponible au même espace mémoire de l'unité de mémoire lors de la seconde période d'horloge. Cet accès possible en lecture est représenté au troisième chronogramme 33 par une impulsion de niveau haut. La nouvelle valeur sera donc disponible dans le premier registre pour l'interface de décodage lors de la troisième période d'horloge. Cette disponibilité est représentée au quatrième chronogramme 34 par une impulsion de niveau haut.

Ainsi, lorsque pour une raison quelconque le transfert de données est perturbé pendant une période d'horloge donnée et que ces conditions de perturbation disparaissent pendant la période d'horloge suivante, l'équivalent en temps d'une période d'horloge est perdu dans la transmission entre le circuit complexe de type microprocesseur et l'interface de mémoire externe.

Les conditions de perturbation de transmission sont évaluées pendant chaque période d'horloge. Cette évaluation est exploitée pendant la période d'horloge suivante. Dans tous les cas, une donnée qui n'a pas été transmise en sortie du circuit tampon doit rester disponible dans le circuit tampon.

Un but de la présente invention est donc de réaliser un circuit tampon qui ne présente pas les inconvénients du dispositif de l'art antérieur décrit ci-dessus, à savoir une perte de temps, sous certaines conditions, équivalente à une période d'horloge.

Le but de la présente invention est atteint en proposant un circuit semblable à celui présenté à la figure 2, auquel on a ajouté un second registre et un second multiplexeur.

Lorsqu'une requête est adressée à la mémoire externe, les données peuvent alors également être écrites dans le second registre. Les données seront ainsi, sous certaines conditions qui seront présentées ultérieurement, disponibles avec une période d'horloge d'avance par rapport au circuit présenté précédemment. Sous ces conditions le second multiplexeur sélectionne la sortie du second registre.

L'invention concerne donc un procédé de stockage et de récupération de données dans un circuit tampon comportant les étapes suivantes :
- chaque donnée est transmise au circuit tampon via un bus de transmission et une interface de bus,
- chaque donnée est écrite dans un premier registre du circuit tampon pour la rendre disponible en sortie du circuit tampon si le premier registre est vide, chaque donnée est stockée dans une unité de mémoire de type RAM si le premier registre contient une autre donnée,
caractérisé en ce que :
- une dernière donnée transmise est écrite dans un second registre du circuit tampon pour la rendre disponible en sortie du circuit tampon simultanément à son éventuelle écriture dans l'unité de mémoire de type RAM.

D'autres modes de réalisation selon l'invention sont spécifiés dans les revendications dépendantes attenantes.

Les différents aspects et avantages de l'invention apparaîtront dans la suite de la description en référence aux figures qui ne sont données qu'à titre indicatif et nullement limitatif de l'invention telle que revendiquée.

La figure 1, déjà décrite, est un schéma bloc des éléments mis en jeu lors des échanges d'informations entre un circuit complexe et une interface de mémoire externe.

La figure 2, également déjà décrite, est un schéma d'un circuit tampon d'entrée d'une interface de mémoire externe.

La figure 3, également déjà décrite, représente quatre chronogrammes montrant l'évolution dans le temps de différentes fonctions intervenant dans l'échange d'informations.

La figure 4 est un schéma d'un circuit tampon d'entrée d'une interface de mémoire externe selon l'invention.

Le schéma de la figure 4 représente une mémoire tampon d'entrée dans laquelle on retrouve les différents éléments et les différentes liaisons évoquées lors de la description de la figure 2. Le circuit tampon d'entrée 20 reçoit à une entrée 21 le bus de transmission 22. Les requêtes d'accès à la mémoire externe transportées par le bus de transmission 22 sont reçues par une interface de bus 23. Cette interface de bus 23 fournit en sortie un signal INW. Une liaison 24 assure la connexion entre l'interface de bus 23 et une première entrée E1 d'un premier multiplexeur 25. Une liaison 27 assure la connexion entre un point de connexion 26 de la liaison 24 et une unité de mémoire 28 de type mémoire RAM. Une liaison 29 assure la connexion entre l'unité de mémoire 28 et une seconde entrée E2 du premier multiplexeur 25.

A ces éléments et liaisons initiaux ont été ajoutés d'autres éléments : un point de connexion 42 sur la liaison 27 ; une liaison 43 établissant la connexion entre le point de connexion 42 et une entrée E6 d'un second registre 41 ; une liaison 44 établissant la connexion entre une sortie S3 du second registre 41 et une première entrée E5 d'un second multiplexeur 45 ; une liaison 46 établissant la connexion entre le registre 212 et une seconde entrée E4 du second multiplexeur 45.

Le fonctionnement et l'exploitation du circuit de la figure 4 dépendent de certaines conditions. Ces conditions sont essentiellement liées à l'occurrence des perturbations dans la transmission des données et au nombre de mots stockés dans l'unité de mémoire de type RAM lorsque la transmission est perturbée.

Le tableau 1 présenté ci-dessous correspond au cas de figure ou un premier mot W1 occupe le premier registre 212 et ou un unique mot supplémentaire arrive dans le circuit au travers de l'interface de bus de transmission 23.

L'étude de ce cas de figure peut se faire sur une plage temporelle de trois périodes d'horloge. La transmission est bloquée à la première période d'horloge. Chaque période d'horloge correspond à une colonne du tableau. La première ligne du tableau 1 correspond au numéro de la période d'horloge. La deuxième ligne du tableau 1 correspond aux opérations effectuées, dans ce cas de figure, avec le circuit de l'art antérieur présenté à la figure 2. La troisième ligne du tableau 1 correspond à l'état (bloqué ou normal) de la transmission. La quatrième ligne du tableau 1 correspond aux opérations effectuées par le circuit présenté à la figure 4. La cinquième et dernière ligne du tableau indique le mot disponible, ainsi que le registre dans lequel il est disponible, en sortie de l'interface de mémoire externe.

Le premier registre 212 contient un premier mot W1.

Pendant la première période d'horloge, un deuxième mot W2 arrive dans l'interface de bus 23. Il est, conformément à l'art antérieur, écrit dans un espace mémoire de l'unité de mémoire de type RAM. Selon l'invention, il est également écrit dans le second registre 41 grâce à la liaison 43.

Pendant la deuxième période d'horloge, la transmission des données est redevenue normale. Le deuxième mot W2 qui était contenu dans le second registre 41 est alors disponible dès la seconde période d'horloge pour l'interface de décodage 213.

Pendant la troisième période d'horloge le deuxième mot W2 est de nouveau disponible depuis le premier registre 212 conformément à l'art antérieur.

**Tableau 1**

| période d'horloge | 1 | 2 | 3 |
|---|---|---|---|
| opérations du circuit de l'art antérieur | écriture de W2 dans RAM | lecture de W2 dans RAM | |
| transmission | bloquée | normale | |
| opérations du circuit selon l'invention | écriture de W2 dans - RAM - registre 41 | | |
| mot disponible | W1 (registre 212) | W2 (registre 41) | W2 (registre 212) |

Pendant partir de la troisième période d'horloge, on retrouve un comportement du circuit similaire au comportement du circuit décrit à la figure 2. Le second registre 41 est libéré dès que le mot qu'il contient est transmis à l'interface de décodage 213 ou qu'un nouveau mot arrive par le bus d'interface 23. Il peut ainsi être de nouveau mis à jour avec un troisième mot provenant de l'interface de bus si nécessaire. C'est ce cas de figure qui va être à présent examiné.

On s'intéresse donc toujours à un cas où la transmission est bloquée lors de la première période d'horloge, et normale à partir de la période d'horloge suivante. Un premier mot W1 est contenu dans le premier registre 212.

Pendant la première période d'horloge, conformément au fonctionnement du circuit de l'art antérieur décrit à la figure 2, un deuxième mot W2 est écrit dans l'unité de mémoire de type mémoire RAM. Il est simultanément écrit dans le second registre 41.

Pendant la deuxième période d'horloge, le deuxième mot W2 est directement disponible pour l'interface de décodage 213 par l'intermédiaire du second registre 41. Si un troisième mot W3 est transmis lors de la deuxième période d'horloge au circuit tampon d'entrée de l'interface de mémoire externe, il est écrit dans un autre espace mémoire de l'unité de mémoire de type mémoire RAM. Il est simultanément écrit dans le second registre 41 qui s'est libéré.

Pendant la troisième période d'horloge, le troisième mot W3 est disponible pour l'interface de décodage 213 par le second registre 41. On peut remarquer qu'au même moment le deuxième mot W2 est disponible dans le premier registre 212 conformément au fonctionnement du circuit de l'art antérieur présenté à la figure 2.

Cependant, le second multiplexeur 45 sélectionne la plus ancienne des données stockées dans les deux registres pour la fournir en sortie du circuit tampon si cette donnée n'a pas déjà été transmise. Or dans ce cas, le deuxième mot W2 a déjà été transmis à l'interface de décodage 213. C'est donc le troisième mot W3 qui est sélectionné.

Toujours conformément au fonctionnement du circuit de l'art antérieur présenté à la figure 2, l'espace mémoire de l'unité de mémoire 28 dans lequel avait été inscrit le troisième mot W3, est lu.

A la quatrième période d'horloge le troisième mot W3 peut ainsi être transmis à l'interface de décodage 213 par l'intermédiaire du premier registre 212. si aucun nouveau mot n'est disponible à la sortie de l'interface de bus 23, le circuit reprend un fonctionnement similaire au circuit de l'art antérieur décrit à la figure 2.

Toutes ces opérations sont synthétisées dans le tableau 2 ci-dessous. Une colonne supplémentaire par rapport au tableau 1 a été rajoutée. Elle correspond à la quatrième période d'horloge qui entre en compte dans l'étude précédente. Les lignes du tableau 2 décrivent les mêmes fonctions que les lignes du tableau 1.

**Tableau 2**

| période d'horloge | 1 | 2 | 3 | 4 |
|---|---|---|---|---|
| opérations du circuit de l'art antérieur | écriture de W2 dans RAM | - lecture de W2 dans RAM - écriture de W3 dans RAM | - lecture de W3 dans RAM | |
| transmission | bloquée | normale | normale | |
| opérations du circuit selon l'invention | écriture de W2 dans - RAM - registre 41 | écriture de W3 dans - RAM - registre 41 | | |
| mot disponible | W1 (registre 212) | W2 (registre 41) | W2 (registre 212) W3 (registre 41) | W3 (registre 212) |

Un dernier cas de figure va être étudié en détail. Ce cas de figure est similaire au précédent sauf que la transmission est de nouveau bloquée pendant la troisième période d'horloge.

Le fonctionnement du circuit décrit à la figure 4, dans ces conditions, est similaire pour les deux premières périodes d'horloge au fonctionnement du précédent cas synthétisé au tableau 2.

Pendant la troisième période d'horloge, la transmission est bloquée. Le mot disponible en sortie doit donc être le même que celui disponible en sortie pendant la deuxième période d'horloge, afin de ne perdre aucune donnée. C'est le deuxième mot W2 qui doit donc être disponible en sortie de l'interface de mémoire externe. Il suffit donc de commuter le second multiplexeur 45 pour répondre à cette exigence de fonctionnement. C'est ainsi le deuxième mot W2 qui est disponible par l'intermédiaire du premier registre 212. Ainsi, la valeur du mot de sortie est maintenue, alors que l'origine de ce mot a changé. Cependant, la transmission étant bloquée, aucune lecture, et notamment celle du troisième mot W3, n'est effectuée dans l'unité de mémoire de type RAM.

Pendant la quatrième période d'horloge, si l'état de la transmission est redevenu normal, le troisième mot W3 est immédiatement disponible par l'intermédiaire du second registre 41. Ceci n'était pas le cas avec le circuit de l'art antérieur présenté à la figure 2.

Toutes ces opérations sont synthétisées dans le tableau 3 ci-dessous.

**Tableau 3**

| période d'horloge | 1 | 2 | 3 | 4 |
|---|---|---|---|---|
| opérations du circuit de l'art antérieur | écriture de W2 dans RAM | - lecture de W2 dans RAM - écriture de W3 dans RAM | - pas de lecture de W3 dans RAM | lecture de W3 dans RAM |
| transmission | bloquée | normale | bloquée | normale |
| opérations du circuit selon l'invention | écriture de W2 dans - RAM - registre 41 | écriture de W3 dans - RAM - registre 41 | | |
| mot disponible | W1 (registre 212) | W2 (registre 41) | W2 (registre 212) | W3 (registre 41) |

D'une façon générale, la donnée la plus ancienne contenue dans l'unité de mémoire 28 de type RAM est écrite dans le premier registre 212 lorsque le premier registre 212 du circuit tampon se libère. Le second multiplexeur connecté au premier registre 212 du circuit tampon et au second registre 41 du circuit tampon sélectionne la donnée la plus ancienne stockée dans l'un des deux registres 41 et 212 pour rendre la donnée disponible en sortie du circuit tampon 20 si cette donnée n'a pas déjà été fournie en sortie du circuit tampon 20. Le second multiplexeur sélectionne la donnée la plus récente stockée dans l'un des deux registres 41 et 212 pour rendre la donnée disponible en sortie du circuit tampon 20 si la donnée la plus ancienne stockée dans l'un de ces deux registres a déjà été fournie en sortie du circuit tampon 20.

Un dispositif de contrôle, préalablement programmé ou réalisé de manière équivalente par un circuit logique, non représenté sur les figures, gère les commutations des différents multiplexeurs de façon à se conformer au fonctionnement exposé dans la description.

Ainsi, lorsque les conditions de blocage de la transmission apparaissent pendant plusieurs impulsions d'horloge, le temps de transmission est plus court si les conditions de blocage de la transmission finissent par disparaître.

## Revendications

1. Procédé de stockage et de récupération de données dans un circuit tampon (20) comportant les étapes suivantes :
- chaque donnée est transmise au circuit tampon (20) via un bus de transmission (22) et une interface de bus (23),
- chaque donnée est écrite dans un premier registre (212) du circuit tampon (20) pour la rendre disponible en sortie du circuit tampon (20) si le premier registre (212) est vide, chaque donnée est stockée dans une unité de mémoire (28) de type RAM si le premier registre (212) contient une autre donnée,
**caractérisé en ce que** :
- une dernière donnée transmise est écrite dans un second registre (41) du circuit tampon (20) pour la rendre disponible en sortie du circuit tampon (20) simultanément à son éventuelle écriture dans l'unité de mémoire de type RAM.

2. Procédé de stockage et de récupération de données dans un circuit tampon (20) selon la revendication 1, **caractérisé en ce que** le second registre (41) est libéré dès que la donnée qu'il contient est transmise ou qu'une nouvelle donnée arrive par l'interface de bus (23).

3. Procédé de stockage et de récupération de données dans un circuit tampon selon la revendication 1 ou 2, **caractérisé en ce que** la donnée la plus ancienne contenue dans l'unité de mémoire (28) de type RAM est écrite dans le premier registre (212) lorsque le premier registre (212) du circuit tampon se libère.

4. Procédé de stockage et de récupération de données dans un circuit tampon (20) selon l'une des revendications 1 à 3, **caractérisé en ce qu'**un multiplexeur (45) connecté au premier registre (212) du circuit tampon et au second registre (41) du circuit tampon sélectionne la donnée la plus ancienne stockée dans l'un de ces deux registres pour la rendre disponible en sortie du circuit tampon (20) si cette donnée n'a pas déjà été fournie en sortie du circuit tampon (20).

5. Procédé de stockage et de récupération de données dans un circuit tampon (20) selon l'une des revendications 1 à 3, **caractérisé en ce que** le multiplexeur (45) connecté au premier registre (212) du circuit tampon et au second registre (41) du circuit tampon sélectionne la donnée la plus récente stockée dans l'un de ces deux registres pour la rendre disponible en sortie du circuit tampon (20) si la donnée la plus ancienne stockée dans l'un de ces deux registres a déjà été fournie en sortie du circuit tampon (20).

## Claims

1. Method of storing and retrieving data in a buffer circuit (20) having the following steps:
- each data item is transmitted to the buffer circuit (20) via a transmission bus (22) and a bus interface (23) ;
- each data item is written into a first register (212) of the buffer circuit (20) in order to make it available at the output of the buffer circuit (20) if the first register (212) is empty, and each data item is stored in a RAM type memory unit (28) if the first register (212) contains another data item;
**characterised in that**:
- a latest transmitted data item is written into a second register (41) of the buffer circuit (20) in order to make it available at the output of the buffer circuit (20) simultaneously with its possible writing into the RAM type memory unit.

2. Method of storing and retrieving data in a buffer circuit (20) according to Claim 1, **characterised in that** the second register (41) is freed as soon as the data item it contains is transmitted or a new data item arrives by means of the bus interface (23).

3. Method of storing and retrieving data in a buffer circuit according to Claim 1 or 2, **characterised in that** the oldest data item contained in the RAM type memory unit (28) is written into the first register (212) when the first register (212) of the buffer circuit is freed.

4. Method of storing and retrieving data in a buffer circuit (20) according to one of Claims 1 to 3, **characterised in that** a multiplexer (45) connected to the first register (212) of the buffer circuit and to the second register (41) of the buffer circuit selects the older data item stored in one of these two registers in order to make it available at the output of the buffer circuit (20) if this data item has not already been supplied at the output of the buffer circuit (20).

5. Method of storing and retrieving data in a buffer circuit (20) according to one of Claims 1 to 3, **characterised in that** the multiplexer (45) connected to the first register (212) of the buffer circuit and to the second register (41) of the buffer circuit selects the more recent data item stored in one of these two registers in order to make it available at the output of the buffer circuit (20) if the older data item stored in one of these two registers has already been supplied at the output of the buffer circuit (20).

## Patentansprüche

1. Verfahren zum Speichern und Wiederverwenden von Daten in einem Pufferspeicher (20) mit den folgenden Schritten:
jeder Datenwert wird über einen Übertragungsbus (22) und eine Busschnittstelle (23) an den Pufferspeicher (20) übertragen, jeder Datenwert wird in ein erstes Register (212) des Pufferspeichers (20) geschrieben, so dass er am Ausgang des Pufferspeichers (20) zur Verfügung steht, wenn das erste Register (212) leer ist, jeder Datenwert wird in einer Speichereinheit (28) vom Typ RAM gespeichert, wenn das erste Register (212) einen anderen Datenwert enthält,
**dadurch gekennzeichnet, dass**
ein letzter übertragener Datenwert in ein zweites Register (41) des Pufferspeichers (20) geschrieben wird, so dass er am Ausgang des Pufferspeichers (20) zur Verfügung steht mit der gleichzeitigen Möglichkeit, ihn in die Speichereinheit vom Typ RAM zu schreiben.

2. Verfahren zum Speichern und Wiederverwerten von Daten in einem Pufferspeicher (20) nach Anspruch 1,
**dadurch gekennzeichnet, dass**
das zweite Register (41) geleert wird, sobald der Datenwert, den es enthält, übertragen wird oder ein neuer Datenwert über die Busschnittstelle (23) ankommt.

3. Verfahren zum Speichern und Wiederverwerten von Daten in einem Pufferspeicher nach Anspruch 1 oder 2,
**dadurch gekennzeichnet, dass**
der älteste Datenwert in der Speichereinheit (28) vom Typ RAM in das erste Register (212) geschrieben wird, wenn das erste Register (212) des Pufferspeichers geleert wird.

4. Verfahren zum Speichern und Wiederverwerten von Daten in einem Pufferspeicher (20) nach einem der Ansprüche 1 bis 3,
**dadurch gekennzeichnet, dass**
ein Multiplexer (45), der mit dem ersten Register (212) des Pufferspeichers und mit dem zweiten Register (41) des Pufferspeichers verbunden ist, den ältesten Datenwert in einem der zwei Register auswählt, so dass er am Ausgang des Pufferspeichers (20) zur Verfügung steht, wenn dieser Datenwert nicht bereits am Ausgang des Pufferspeichers (20) zur Verfügung gestellt wurde.

5. Verfahren zum Speichern und Wiederverwerten von Daten in einem Pufferspeicher (20) nach einem der Ansprüche 1 bis 3,
**dadurch gekennzeichnet, dass**
der Multiplexer (45), der mit dem ersten Register (212) des Pufferspeichers und mit dem zweiten Register (41) des Pufferspeichers verbunden ist, den jüngsten Datenwert in einem der zwei Register auswählt, so dass er am Ausgang des Pufferspeichers (20) zur Verfügung steht, wenn der älteste Datenwert bereits am Ausgang des Pufferspeichers (20) zur Verfügung gestellt wurde.
